# EUROPÄISCHE PATENTSCHRIFT

(11) **EP 1 061 842 B1**
(45) Veröffentlichungstag und Bekanntmachung des Hinweises auf die Patenterteilung: **07.05.2003**
(21) Anmeldenummer: 99910202.3
(22) Anmeldetag: 06.02.1999
(51) Int. Cl.: A47J 37/04

(54) **TROMMELKOCHER**
DRUM COOKER
APPAREIL DE CUISSON SOUS FORME DE TAMBOUR

(30) Priorität: 10.03.1998 DE 19810240
(43) Veröffentlichungstag der Anmeldung: 27.12.2000
(73) Patentinhaber: Bichsel, Rudolf, 3400 Burgdorf (CH)
(72) Erfinder: Bichsel, Rudolf, 3400 Burgdorf (CH)
(74) Vertreter: Weller, Wolfgang, Dr.
(86) Internationale Anmeldenummer: EP9900796
(87) Internationale Veröffentlichungsnummer: WO99045830

(56) Entgegenhaltungen:
- US-A- 4 203 358
- US-A- 4 335 649
- PATENT ABSTRACTS OF JAPAN vol. 018, no. 301 (C-1210), 9. Juni 1994 & JP 06 062968 A (MITSUBISHI ELECTRIC CORP), 8. März 1994
- "Rotary Cereal Cooker" APV BAKER INC. , XP002108205 http://www.apvbaker.co.uk/cereal/product/c ereal1.htp

## Beschreibung

Die Erfindung betrifft einen Trommelkocher zum Kochen von körnigem Gut, insbesondere Maisgrits zur Herstellung von Cornflakes, mit einem um eine Achse drehbaren Behälter, mit Düsen, die in den Behälter münden, die mit Leitungen verbunden sind, durch die ein gasförmiges wärmetragendes Medium in den Behälter einführbar ist, wobei zumindest zwei umfänglich verteilte Düsen vorgesehen sind, so daß zumindest eine Düse im vom Kochgut bedeckten Bereich mündet und zumindest eine Düse im kochgutfreien Bereich mündet.

Ein derartiger Trommelkocher ist bspw. unter der Typenbezeichnung DSCK der Firma Gebr. Bühler AG, Uzwil, Schweiz, bekannt.

Ein vergleichbarer Trommelkocher ist von der Firma APV Baker, Peterborough, England unter der Bezeichnung "Rotary cereal cooker" bekannt.

Die Achse des drehbaren Behälters verläuft horizontal, der Behälter selbst hat eine etwa faßförmige Kontur. Im Behälter ist das zu behandelnde körnige Gut, bspw. Maisgrits, in Wasser aufgenommen, der Behälter ist bis über die Hälfte mit diesem Gut-Wasser-Gemisch gefüllt.

Zur Wärmezufuhr sind Düsen in der Behälterwand vorgesehen, die über längs der Außenseite des Behälters geführte Leitungen mit einem heißen gasförmigen Medium, nämlich heißem Wasserdampf, versorgt werden. Die Anordnung der Düsen ist so, daß die Düsengruppen in etwa diametral gegenüberliegen. Alle Leitungen bzw. Düsengruppen sind über miteinander kommunizierende Leitungen aus einer gemeinsamen Versorgungsquelle versorgt. Das heißt, der Dampf wird gleichzeitig allen Leitungen und allen Düsen zugespeist.

Im praktischen Einsatz wurde allerdings festgestellt, daß der Dampf nur über diejenigen Düsen in das Innere des Behälters eintritt, die nicht in den vom Gut-Wasser-Gemisch bedeckten Bereich münden. Das sind jeweils die Düsen, die sich bei der Drehbewegung oberhalb des Gut-Wasser-Gemisches befinden.

In diejenigen Düsen, die jeweils gerade im vom Gut-Wasser-Gemisch bedeckten Bereich münden, dringt kaum Medium ein, da der Gegendruck des im Behälter aufgenommenen Gut-Wasser-Gemisches so groß ist, daß das Medium nicht in nennenswertem Ausmaß durch diese Düsen eintreten kann.

Dies beruht darauf, daß das über sämtliche Leitungen gleichzeitig zugespeiste Gas sich den Weg des geringsten Widerstandes sucht, dieser besteht bei den Düsen, die nicht in das Gut-Wasser-Ggemisch eingetaucht sind.

Selbst ein Erhöhen des Druckes führt nicht dazu, daß das Gas über die Düsen eingeführt wird, die im vom Kochgut bedeckten Bereich einmünden.

Dies führt nun dazu, daß ein sehr schlechter Wärmeübergang von dem zugeführten wärmeführenden Medium zu der sich im Behälter umwälzenden Gut-Wasser-Gemisch, also die Mischung aus Wasser und dem zu behandelnden Maisgrits, stattfindet. Der Wärmeaustausch findet im wesentlichen an der Oberfläche der sich im Querschnitt nierenförmig umwälzenden Masse und dem darüber befindlichen Dampfraum statt.

Da laufend neues wärmeführendes Medium für den Kochvorgang zugeführt werden muß, müssen zusätzliche Vorkehrungen getroffen werden, damit auch gasförmiges Medium wieder aus dem Behälter abgeführt werden kann, was über Öffnungen erfolgt, die über dem Gut-Wasser-Gemisch liegen. Dabei besteht dann die Gefahr, daß frisch zugeführtes Medium, ohne daß es in großen Wärmeaustausch mit der umgewälzten Gut-Wasser-Gemisch getreten ist, wieder abgeführt wird.

Dies hat den erheblichen Nachteil, daß sehr lange Kochzeiten notwendig sind, wobei die Gefahr besteht, daß in äußeren Bereichen der lange Zeit gekochten Maiskörner schon Gelatinierungsvorgänge an der Stärke stattfinden, im Inneren des Maiskorns aber der Kochvorgang noch nicht zu dem gewünschten Ergebnis geführt hat, dort noch ein sogenannter "weißer Punkt" an ungekochtem Stärkematerial besteht.

Dies führt bei der Weiterverarbeitung dazu, daß nach dem Walzen der Körner zu Plättchen Bereiche in diesen entstehen, die nicht gelatinierte Bereiche aufweisen. Im nachfolgenden Röstvorgang entstehen Cornflakes, die im nicht durchgekochten Bereich (weißer Punkt) helle Verfärbungen aufweisen, die keine eigentlichen Blisters (Bläschen) enthalten und statt dessen in diesen Bereichen eine Backstruktur, nämlich eine blätterteigartige geschlossene Struktur, aufweisen.

Aus der US 4 203 358 A ist ein Trommelkocher zum Kochen von körnigem Gut bekannt, dessen Behälter als perforierte Trommel ausgebildet ist. Ein gasförmiges wärmetragendes Medium wird an die Außenseite der perforierten Trommel in dem Bereich herangeführt, in dem sich an der Innenseite das zu behandelnde Gut befindet. Das gasförmige Medium dringt durch die Perforationen von der Außenseite her in den Innenraum des sich drehenden Behälters ein.

Energiebilanzmäßig gesehen ist dieses Kochverfahren äußerst ungünstig.

Es ist daher Aufgabe der vorliegenden Erfindung, einen Trommelkocher der eingangs genannten Art dahingehend weiterzuentwickeln, daß ein effizienter Wärmeaustausch bzw. Kochvorgang stattfindet, der zu kürzeren Kochzeiten führt und mit dem zusätzlich ein gutes und gleichmäßiges Kochergebnis erzielt wird.

Erfindungsgemäß wird die Aufgabe dadurch gelöst, daß eine Steuervorrichtung vorgesehen ist, über die jeweils nur diejenigen Düsen mit Medium versorgt werden, die gerade im vom Kochgut bedeckten Bereich münden.

Diese Maßnahme hat den Vorteil, daß nunmehr das gasförmige Medium ausschließlich durch die Düsen eingeführt wird, die im vom Kochgut bedeckten Bereich münden, also unter der Wasseroberfläche liegen, so daß dann das Medium direkt in das Wasser eingeblasen wird und dort intensiv sowohl mit dem Wasser als auch mit dem zu behandelnden Gut in Wärmeaustausch tritt.

Durch diese Zwangsführung wird eine wesentlich gezieltere, raschere und effektivere Wärmeübertragung bewerkstelligt, die in wesentlich kürzerer Zeit zu einem gleichmäßigen und hervorragenden Kochergebnis führt. Das eingeführte Medium perlt gleichmäßig verteilt durch die Düsen in das zu erwärmende Gut-Wasser-Gemisch ein.

Durch die gezielte Einführung des Mediums in das Gut-Wasser-Gemisch kann der Behälter wesentlich höher befüllt werden, so daß bei gleicher Baugröße wesentlich mehr Gut behandelt werden kann. Ein voluminöses Druckpolster, das beim Stand der Technik zum Wärmeaustausch notwendig war, ist nun nicht mehr erforderlich, der Dampfraum dient ausschließlich zur Entlüftung.

In einer weiteren Ausgestaltung der Erfindung ist die Steuervorrichtung so ausgebildet, daß über diejenigen Düsen, die gerade nicht im mit vom Kochgut bedeckten Bereich münden, der Behälter entlüftbar ist.

Diese Maßnahme hat nun den zusätzlichen erheblichen Vorteil, daß eine sehr gezielte und gleichmäßige Durchführung des wärmeführenden Mediums durch den Behälter erzielt wird, d.h. einerseits tritt das wärmeführende Medium direkt in das Gut-Wasser-Gemisch ein, durchströmt dieses und wird über die Düsen, die sich gerade oberhalb der Gut-Wasser-Gemischoberfläche befinden, wieder aus dem Behälter abgeführt.

Ein Druckaufbau läßt sich dadurch im Trommelkocher einfach einstellen.

Die Düsen arbeiten somit dann, wenn sie eingetaucht sind, als Einblasdüsen, wenn sie sich über der Wasseroberfläche befinden als Entlüftungsdüsen.

In einer weiteren Ausgestaltung der Erfindung sind diametral gegenüberliegende Düsen vorgesehen.

Diese an sich bekannte Maßnahme hat steuertechnisch den Vorteil, daß die Umschaltvorgänge gezielt und einfach durchgeführt werden können, d.h. in einem bestimmten Drehwinkelbereich arbeitet eine Düse im Einblasmodus, in dem nächsten bestimmten Winkelbereich im Entlüftungsmodus.

In einer weiteren Ausgestaltung der Erfindung sind längs der Drehachse des Behälters gesehen mehrere Düsen angeordnet.

Diese Maßnahme hat den Vorteil, daß durch die mehreren Düsen, insbesondere bei sehr großen Trommelkochern, an mehreren Stellen das wärmeführende Medium eingeblasen werden kann, so daß eine besonders gleichmäßige und rasche Wärmeverteilung gewährleistet ist.

In einer weiteren Ausgestaltung der Erfindung weist die Steuervorrichtung eine Mehrwegdurchführung auf, durch die Medien zum Behälter geführt werden und von diesem wieder abgeführt werden.

Mehrwegdurchführungen als stationäre Bauelemente, die mehrere Medien getrennt einem sich drehenden Behältnis zuführen, sind als kompakte fertige Bauteile erhältlich, so daß eine einfache und wenig aufwendige Steuerung ermöglicht ist.

Über die Mehrwegdurchführung kann dann nicht nur das wärmeführende Medium zu- bzw. abgeführt werden, sondern bspw. auch das Wasser, in dem die Maisgrits gekocht werden und ggf. auch Aroma- oder Süßstoffe nach und nach zugeführt werden. Es können auch zusätzlich noch Spülmediendurchführungen vorgesehen sein, so daß nach Entleeren des Trommelkochers über die Steuervorrichtung auch ein Reinigen durchgeführt werden kann.

Die Erfindung wird nachfolgend anhand eines ausgewählten Ausführungsbeispiels in Zusammenhang mit den beiliegenden Zeichnungen näher beschrieben und erläutert. Es zeigen:
- Fig. 1: stark schematisiert und teilweise geschnitten eine Seitenansicht eines Trommelkochers,
- Fig. 2: eine Darstellung eines zu behandelnden Maisgrits,
- Fig. 3: eine weitere Bearbeitungsstufe eines solchen Grits nach Pressen zwischen Walzen,
- Fig. 4: ein endfertiges Cornflake, wie es angestrebt werden soll, und
- Fig. 5: ein Cornflake, das entsteht, wenn das Maisgrit ungleichmäßig gekocht wurde.

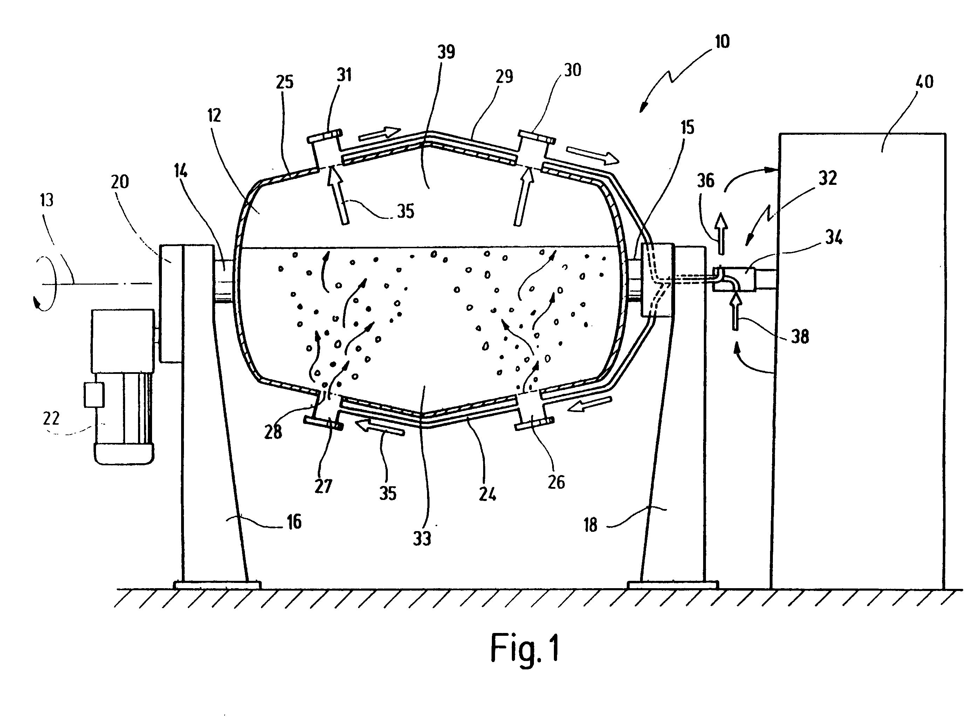

Ein in Fig. 1 dargestellter Trommelkocher ist in seiner Gesamtheit mit der Bezugsziffer 10 bezeichnet.

Der Trommelkocher 10 weist einen liegenden, etwa faßförmigen Behälter 12 auf, der um eine horizontale Drehachse 13 drehbar ist.

Der Behälter 12 ist über seitliche Lager 14, 15 drehbar gelagert in Ständern 16 und 18 aufgenommen. Über einen Kettenantrieb 20, der mit einem Antriebsmotor 22 verbunden ist, wird der Behälter um die Drehachse 13 drehangetrieben.

Eine erste Leitung 24 ist längs einer Mantellinie längs der Außenseite des Behälters 12 geführt und verbindet zwei Düsen 26 und 27, die in das Innere des Behälters 12 münden. Jede Düse 26, 27 ist dabei mit einem Sieb 28 versehen.

Dieser Leitungs- und Düsenanordnung diametral gegenüberliegend ist eine weitere Leitung 29 längs der Außenseite geführt, die zwei Düsen 30 und 31 versorgt, die ebenfalls im Inneren des Behälters 12 münden.

Beide Leitungen 24 und 29 münden in eine Steuervorrichtung 32, die mit einer Mehrwegdurchführung 34 versehen ist.

Die Steuervorrichtung 32 ist mit einer Versorgungs- und Steuereinheit 40 verbunden, über die die später zu beschreibenden Medien und Steuervorgänge versorgt bzw. gesteuert werden.

Der Behälter 12 ist mit einem hier nicht dargestellten Deckel versehen, über den das zu behandelnde Gut, bspw. Maisgrits, eingeführt bzw. entnommen werden kann.

Maisgrits sind Maiskörner, die entkeimt und geschält worden sind.

Zusätzlich zu dem Maisgrits wird Wasser in den Behälter 12 eingeführt, wobei die Füllhöhe erheblich über der Höhe der Drehachse 13 liegt, wie das in Fig. 1 angedeutet ist.

Zum Kochen des im Behälter 12 aufgenommenen Gemisches aus Wasser und Maisgrits, wird heißer Dampf mit etwa 120°C und einem Druck von etwa 1 bis 2 bar zugeführt.

Entsprechend der Erfindung ist die Schaltung bzw. Steuerung über die Steuervorrichtung 32 derart, daß das Medium 35 jeweils nur der Leitung zugespeist wird, die diejenigen Düsen versorgt, die im vom Kochgut bedeckten Bereich 33 münden.

In der Darstellung von Fig. 1 ist das die Leitung 24, die die Düsen 26 und 27 versorgt.

Das Medium 35 wird also über die Zuführung 38, die Steuervorrichtung 32, die dazu eine Mehrwegdurchführung 34 aufweist, der Leitung 24 und von dieser den Düsen 26 und 27 zugespeist. Über die Siebe 28 tritt das Medium 35 feinstperlig verteilt in das Kochgut ein, wie das in Fig. 1 durch die Strömungspfeile und das Perlen angedeutet ist. Dadurch kann ein intensiver, rascher und gleichmäßiger Wärmeübergang vom Medium 35 auf das im Behälter 12 aufgenommene Gut-Wasser-Gemisch stattfinden. Hat das Medium 35 das Gemisch durchströmt, also die Flüssigkeitsmenge verlassen, strömt es zu den diametral gegenüberliegenden Düsen 30 und 31 und kann über diese und die Leitung 29 vom Behälter 12 abgeführt werden. Die Leitung 29 führt also das Medium über die Mehrwegführung 34 zu einer Entlüftung 36.

In der in Fig. 1 dargestellten Stellung, die einer Momentanaufnahme des sich drehenden Trommelkochers 10 entspricht, arbeiten somit die Düsen 26 und 27 im Einblasmodus, die Düsen 30 und 31 im Entlüftungsmodus. Dieser wird solange beibehalten, bis die Düsen 26 und 27 im vom Kochgut bedeckten Bereich 33 münden. Haben die Düsen 26 und 27 diesen Bereich verlassen, werden diese auf den Entlüftungsmodus umgeschaltet, zwischenzeitlich haben die Düsen 30 und 31 den vom Kochgut bedeckten Bereich 33 erreicht und werden dann vom Entlüftungsmodus auf den Einblasmodus umgeschaltet, was automatisch und zwangsgesteuert durch die Mehrwegdurchführung 34 der Steuervorrichtung 32 bewerkstelligt wird. Dadurch ist es möglich, in kurzer Zeit ein körniges Gut, bspw. die Maisgrits 42, in den gewünschten gekochten Zustand überzuführen.

Gegenüber vergleichbaren Apparaturen aus dem Stand der Technik, wie sie eingangs beschrieben sind, also mit gleicher Größe und Mengendurchsatz, bei denen die Behandlungszeiten im Bereich von 120 bis 150 Minuten dauern, konnte eine Reduzierung dieser Behandlungsdauer um 20 bis 30 % erzielt werden. Darüber hinaus wurde nicht nur eine Reduzierung der Behandlungszeit erzielt, sondern schon nach dieser kurzen Behandlungszeit wurde ein einwandfrei gekochtes Produkt erhalten. Die Beladung ist außerdem um ca. 20 % höher als bei herkömmlichen Trommelkochern.

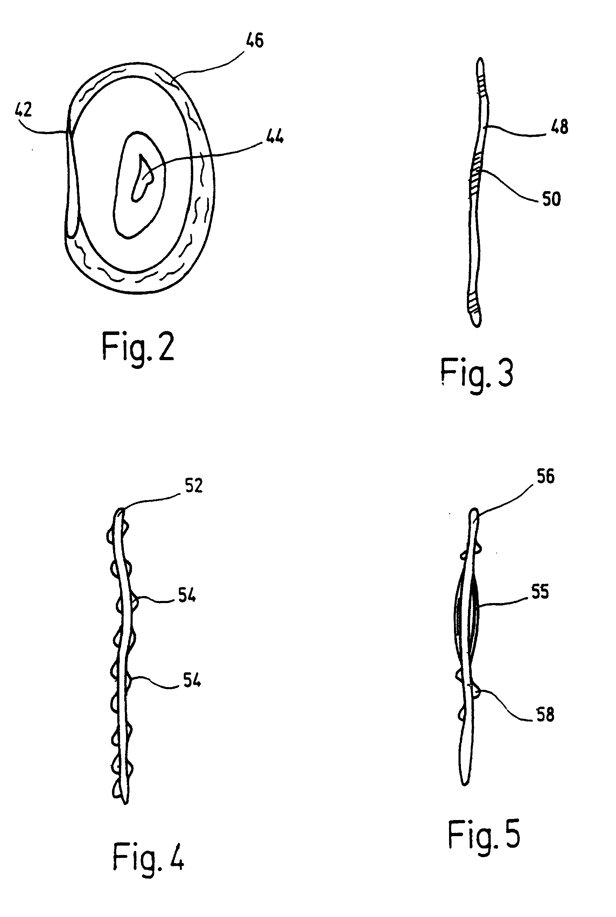

In Fig. 2 ist ein Maisgrit 42 dargestellt, das entsteht, wenn der Kochvorgang zu lange und mit unzureichendem Wärmeaustausch durchgeführt wird.

Dabei entsteht ein Grit, an dessen äußeren Bereichen 46 schon durch die lange Behandlungszeit die Stärke gelatiniert ist, also eine klebrige äußere Schicht entstanden ist.

Im inneren Kern sind noch keine Kochvorgänge abgelaufen, d.h. es existiert der sogenannte weiße Punkt 44.

Wird ein solches Grit 42 anschließend weiterbehandelt, also zwischen Walzen gepreßt, so entsteht ein Plättchen 48, wie es in Fig. 3 dargestellt ist, das Bereiche 50 enthält, die noch ungekocht sind. Wird nun ein solches Plättchen geröstet, um zu dem eigentlichen Cornflake zu gelangen, so entsteht ein Cornflake 56, wie es in Fig. 5 dargestellt ist. Dieses Cornflake 56 weist an den unvollständig gekochten Stellen eine backstrukturähnliche blätterteigartige Oberfläche 55 auf. In diesem Bereich weist das Cornflake 56 unerwünschte helle Verfärbungen auf.

Es entstehen nur wenige der gewünschten Blister 58.

Mit dem nun erfindungsgemäß ausgestatteten Trommelkocher 10 kann ein Maisgrit erhalten werden, das wesentlich gleichmäßiger und rascher durchgekocht ist, so daß weder äußere verklebte Schichten 46 entstehen, noch im inneren Kern ein weißer Punkt 44 verbleibt.

Wird dann ein solches gleichmäßig behandeltes Maisgrit verarbeitet, entsteht nach dem Röstvorgang ein Cornflake 52, wie es in Fig. 4 dargestellt ist, das an seiner Oberfläche gleichmäßig mit feinen kleinen Blistern 54 versehen ist.

In Fig. 1 sind der Übersichtlichkeit halber der Deckel und auch weitere Zuführleitungen, z.B. zum Zuführen von Sirup oder zum Zuführen von Wasser zum Reinigen und dgl., nicht dargestellt, die dann dementsprechend über die Außenseite geführt werden können.

## Patentansprüche

1. Trommelkocher zum Kochen von körnigem Gut, insbesondere Maisgrits (42) zur Herstellung von Cornflakes, mit einem um eine Achse (13) drehbaren Behälter (12), mit Düsen (26, 27; 30, 31), die in den Behälter (12) münden, die mit Leitungen (24; 29) verbunden sind, durch die ein gasförmiges wärmetragendes Medium (35) in den Behälter (12) einführbar ist, wobei zumindest zwei umfänglich am Behälter (12) verteilte Düsen (26, 27; 30, 31) vorgesehen sind, so daß zumindest eine Düse (26, 27) im vom Kochgut bedeckten Bereich (33) mündet und zumindest eine Düse (30, 31) im vom kochgutfreien Bereich (39) mündet, **dadurch gekennzeichnet, daß** eine Steuervorrichtung (32) vorgesehen ist, über die jeweils nur diejenigen Düsen (26, 27) mit Medium (35) versorgt werden, die gerade im vom Kochgut bedeckten Bereich (33) münden.

2. Trommelkocher nach Anspruch 1, **dadurch gekennzeichnet, daß** die Steuervorrichtung (32) derart ausgebildet ist, daß über diejenigen Düsen (30, 31), die gerade nicht im vom Kochgut bedeckten Bereich (33) münden, der Behälter (12) entlüftbar ist.

3. Trommelkocher nach Anspruch 1 oder 2, **dadurch gekennzeichnet, daß** diametral gegenüberliegende Düsen (26, 27; 30, 31) vorgesehen sind.

4. Trommelkocher nach einem der Ansprüche 1 bis 3, **dadurch gekennzeichnet, daß** längs der Drehachse (13) des Behälters (12) gesehen mehrere Düsen (26, 27; 30, 31) angeordnet sind.

5. Trommelkocher nach einem der Ansprüche 1 bis 4, **dadurch gekennzeichnet, daß** die Steuervorrichtung (32) eine Mehrwegdurchführung (34) aufweist, durch die Medien (35) getrennt zum Behälter führbar sind, und von diesem wieder abführbar sind.

## Claims

1. Drum cooker for cooking granular products, especially maize grits (42) for the production of cornflakes, having a vessel (12) mounted to rotate about an axis (13) with nozzles (26, 27; 30, 31) that open into the vessel (12) and that are connected with lines (24; 29) through which a gaseous heat-carrying medium (35) can be introduced into the vessel (12), there being provided on the vessel (12) at least two circumferentially distributed nozzles (26, 27; 30, 31) so that at least one nozzle (26, 27) opens into the area (33) covered by the product while at least one nozzle (30, 31) opens into the area (39) not covered by the product, **characterized in that** a control means (32) is provided which ensures that the medium (35) will be supplied at any time to those nozzles (26, 27) only that open into the area (33) covered by the product.

2. Drum cooker of Claim 1, **characterized in that** the design of the control means (32) is such that the vessel (12) can be vented via those nozzles (30, 31) that open at any time into the area (33) not covered by the product.

3. Drum cooker of Claim 1 or Claim 2, **characterized in that** diametrically opposite nozzles (26, 27; 30, 31) are provided.

4. Drum cooker of anyone of Claims 1 to 3, **characterized in that** a plurality of nozzles (26, 27; 30, 31) are arranged along the axis of rotation (13) of the vessel (12).

5. Drum cooker of anyone one of Claims 1 to 4, **characterized in that** the control means (32) comprises a multiple line distribution (34) through which media (35) can be separately guided into and out of the vessel.

## Revendications

1. Appareil de cuisson à tambour pour la cuisson de matières granuleuses, en particulier de grains de maïs (42) pour la fabrication de cornflakes, avec un récipient (12) pouvant tourner autour d'un axe (13), avec des buses (26, 27 ; 30, 31) qui débouchent dans le récipient (12), qui sont reliées à des conduites (24 ; 29), à travers lesquelles un agent gazeux portant de la chaleur (35) peut être introduit dans le récipient (12), au moins deux buses (26, 27 ; 30, 31) réparties sur la circonférence du récipient (12) étant prévues, de sorte qu'au moins une buse (26, 27) débouche dans la zone (33) couverte par la charge à cuire et au moins une buse (30, 31) débouche dans la zone (39) dépourvue de charge à cuire, **caractérisé en ce qu'**il est prévu un dispositif de commande (32) par l'intermédiaire duquel seules sont alimentées en agent (35) les buses (26, 27) qui débouchent dans la zone (33) couverte de charge à cuire.

2. Appareil de cuisson à tambour selon la revendication 1, **caractérisé en ce que** le dispositif de commande (32) est conformé de telle manière que le récipient (12) peut être vidé de son air par l'intermédiaire des buses (30, 31) qui ne débouchent pas dans la zone (33) couverte de charge à cuire.

3. Appareil de cuisson à tambour selon la revendication 1 ou 2, **caractérisé en ce que** des buses diamétralement opposées (26, 27 ; 30, 31) sont prévues.

4. Appareil de cuisson à tambour selon l'une des revendications 1 à 3, **caractérisé en ce que** plusieurs buses (26, 27 ; 30, 31) sont placées le long de l'axe de rotation (13) du récipient (12).

5. Appareil de cuisson à tambour selon l'une des revendications 1 à 4, **caractérisé en ce que** le dispositif de commande (32) présente un passage (34) à plusieurs voies à travers lequel des agents (35) peuvent être introduits séparément dans le récipient et être ensuite extraits de celui-ci.
